# EUROPEAN PATENT APPLICATION

(11) **EP 4 683 071 A1**
(43) Date of publication of application: **21.01.2026**
(21) Application number: 23943393.1
(22) Date of filing: 08.12.2023
(51) Int. Cl.: H01M 50/244

(54) **BATTERY AND ELECTRIC DEVICE**

(30) Priority: 29.06.2023 CN 202310782442
(71) Applicant: Contemporary Amperex Technology Co., Limited, Ningde, Fujian 352100 (CN)
(72) Inventor: DAI, Jiabao, Ningde, Fujian 352100 (CN)
(74) Representative: Kraus & Lederer PartGmbB
(86) International application number: PCT/CN2023/137310
(87) International publication number: WO 2025/000918

(57) **Abstract**

The present application provides a battery and an electric apparatus capable of improving the structural performance of a mounting structure in the battery. The battery includes: a battery cell; a box, configured to accommodate the battery cell, where the box includes a first wall and a second wall that are oppositely arranged, the first wall and the second wall intersect with a first direction, a first cross beam is disposed between the first wall and the second wall, the first cross beam includes a third wall that intersects with the first direction and is close to the first wall, a gap is disposed between the third wall and the first wall, and the first cross beam is provided with a first through hole extending along the first direction; and a mounting structure, configured to at least partially pass through the first through hole and abut against the third wall in the gap.

## Description

The present application claims priority to Chinese Patent Application No. 202310782442.5, filed with the China National Intellectual Property Administration on June 29, 2023, and entitled "BATTERY AND ELECTRIC APPARATUS", which is incorporated herein by reference in its entirety.

### TECHNICAL FIELD

The present application relates to the field of batteries, and in particular, to a battery and an electric apparatus.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technologies are an important factor in connection with their development.

A mounting structure in a battery is configured to mount the battery on an external mechanism of the battery, and how to improve the structural performance of the mounting structure has become an urgent problem to be solved.

### SUMMARY

According to a first aspect, a battery is provided, including: a battery cell; a box, configured to accommodate the battery cell, where the box includes a first wall and a second wall that are oppositely arranged, the first wall and the second wall intersect with the first direction, a first cross beam is disposed between the first wall and the second wall, the first cross beam includes a third wall that intersects with the first direction and is close to the first wall, a gap is disposed between the third wall and the first wall, and the first cross beam is provided with a first through hole extending along the first direction; and a mounting structure, configured to at least partially pass through the first through hole and abut against the third wall in the gap.

The battery is mounted on its external mechanism through the mounting structure in the battery, and the first cross beam is typically disposed in the box of the battery. In the embodiment of the present application, the first through hole for accommodating the mounting structure is disposed on the first cross beam, and a gap is disposed between the third wall of the first cross beam and the first wall of the box, and the mounting structure is configured to pass through the first through hole on the first cross beam and abut against the first cross beam in the gap between the first cross beam and the box, thereby making full use of the first through hole on the first cross beam and the gap between the first cross beam and the box, achieving the cooperation between the mounting structure and the box and the first cross beam, and improving the structural performance of the mounting structure.

An included angle between the first wall and the first direction is, for example, within any one of the following ranges: 90°±15°, 90°±10°, or 90°±5°.

An included angle between the second wall and the first direction is, for example, within any one of the following ranges: 90°±15°, 90°±10°, or 90°±5°.

An included angle between the third wall and the first direction is, for example, within any one of the following ranges: 90°±15°, 90°±10°, or 90°±5°.

In some possible implementations, the mounting structure includes a first sleeve, a second sleeve, and an adapter sleeve connected between the second sleeve and the first sleeve, an end of the adapter sleeve extends along a second direction to form the first extension portion, and the second direction is at a predetermined angle with the first direction, where the adapter sleeve is configured to pass through the first through hole and abut against the third wall in the gap through the first extension portion. The predetermined angle is, for example, within any one of the following ranges: 90°±15°, 90°±10°, or 90°±5°.

In this embodiment, the mounting structure includes the first sleeve, the second sleeve, and the adapter sleeve for connecting the second sleeve and the first sleeve, the end of the adapter sleeve extends along the second direction to form the first extension portion, and the adapter sleeve is configured to pass through the first through hole in the first cross beam and abut against the third wall of the first cross beam in the gap through the first extension portion. Since a thickness of the first extension portion is small, the gap can be set to be small, thereby improving the space utilization rate inside the battery.

In some possible implementations, a second through hole is disposed at a position on the first wall corresponding to the first through hole, the first sleeve includes a second extension portion extending along the second direction, and the first sleeve is configured to pass through the second through hole to connect to the adapter sleeve and abut against the first wall through the second extension portion on a side of the first wall away from the battery cell. In this way, the connection between the mounting structure and the first wall of the box is achieved.

In some possible implementations, a first sealing member is disposed between the first extension portion and the first wall. The arrangement of the first sealing member can, to a certain extent, block external liquid from entering the interior of the battery from a contact position between the first extension portion and the first wall.

In some possible implementations, an inner wall of the adapter sleeve is sleeved on outer walls of the first sleeve and the second sleeve to achieve the connection to the second sleeve and the first sleeve through the adapter sleeve.

In some possible implementations, a second sealing member is disposed between the inner wall of the adapter sleeve and the outer wall of the second sleeve. The arrangement of the second sealing member can, to a certain extent, block external liquid from entering the interior of the battery from a connection between the adapter sleeve and the second sleeve.

In some possible implementations, the battery further includes a thermal management component of the battery cell, the thermal management component is disposed between the second wall and the battery cell, a third through hole is provided at a position on the thermal management component corresponding to the first through hole, the second sleeve includes a third extension portion extending along the second direction, and the second sleeve is configured to pass through the third through hole to connect to the adapter sleeve and abut against the thermal management component through the third extension portion on a side of the thermal management component away from the battery cell. In this way, the mounting structure can provide mounting force to the battery through the thermal management component.

In some possible implementations, a third sealing member is disposed between the third extension portion and the thermal management component. The arrangement of the third sealing member can, to a certain extent, block external liquid from entering the interior of the battery from a connection between the first sleeve and the thermal management component.

In some possible implementations, an installation portion is disposed on the first extension portion, and the installation portion is configured to cooperate with an installation tool to install the adapter sleeve. By arranging the installation portion at the end of the adapter sleeve, it is convenient to install the adapter sleeve using a matched installation tool.

In some possible implementations, the installation portion is a recess disposed on the first extension portion, an opening of the recess faces the first wall along the first direction, and the recess is configured to be snap-fitted with the installation tool. By snap-fitting the installation tool into the recess and applying a torsional force to the adapter sleeve from the end of the adapter sleeve to sleeve the adapter sleeve with the first sleeve, it is easy to implement and simple to operate. For example, the recess is a hexagonal recess, and the installation tool is an Allen wrench.

In some possible implementations, the first wall includes a first region and a second region, where the first region is configured to connect the mounting structure, the first region and the second region have different heights along the first direction to form an accommodation space along the first direction, and the accommodation space is configured to accommodate an external mechanism of the battery. That is, an upper wall of the box of the battery can be provided with a recess to accommodate the external mechanism of the battery, such as a vehicle body beam, which is conducive to improving the utilization rate of the space inside a vehicle.

In some possible implementations, the first cross beam includes at least one cavity disposed along the first direction to reduce the weight of the first cross beam.

According to a second aspect, an electric apparatus is provided, including the battery according to the first aspect or any possible implementation of the first aspect, where the battery is configured to provide electric energy to the electric apparatus.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts.
FIG. 1 is a schematic structural diagram of a vehicle according to an embodiment of the present application.
FIG. 2 is a schematic structural diagram of a battery according to an embodiment of the present application.
FIG. 3 is a partial exploded view of a battery according to an embodiment of the present application.
FIG. 4 is a partial cross-sectional view of a battery according to an embodiment of the present application.
FIG. 5 is a schematic structural diagram of an adapter sleeve according to an embodiment of the present application.
FIG. 6 is a partial exploded view of a battery according to another embodiment of the present application.

In the accompanying drawings, the figures are not drawn to scale.

### DESCRIPTION OF EMBODIMENTS

The following further describes embodiments of the present application in detail with reference to the accompanying drawings and embodiments. The detailed description of the embodiments and the accompanying drawings are intended to illustrate the principle of the present application, rather than to limit the scope of the present application, meaning the present application is not limited to the embodiments described herein.

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to indicate a particular sequence or relative importance.

The orientation terms appearing in the following description all refer to the orientations shown in the drawings and do not limit the specific structure of the present application. In the descriptions of the present application, it should also be noted that unless otherwise specified and defined explicitly, the terms "mount", "connect", and "join" should be understood in their general senses. For example, they may refer to a fixed connection, a detachable connection, or an integral connection; and a direct connection or an indirect connection via an intermediate medium. Persons of ordinary skill in the art can understand specific meanings of these terms in the present application based on specific situations.

In the present application, reference to "embodiment" means that specific features, structures, or characteristics described with reference to the embodiment may be incorporated in at least one embodiment of the present application. The term "embodiment" appearing in various places in the specification does not necessarily refer to the same embodiment or an independent or alternative embodiment that is exclusive of other embodiments. Persons skilled in the art explicitly and implicitly understand that the embodiments described in the present application can be combined with other embodiments.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the present application, "a plurality of" means more than two. Similarly, "a plurality of groups" means two groups or more than two groups, and "a plurality of pieces" means two pieces or more than two pieces.

In the embodiments of the present application, the battery cell may be a secondary battery, and the secondary battery refers to a battery cell that can be recharged to activate active materials for continuous use after the battery cell is discharged. The battery cell may be, for example, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like. This is not limited in the embodiments of the present application.

The battery cell typically includes an electrode assembly. The electrode assembly includes a positive electrode, a negative electrode, and a separator. During the charging and discharging process of the battery cell, active ions, such as lithium ions, intercalate and deintercalate back and forth between the positive electrode and the negative electrode. The separator is disposed between the positive electrode and the negative electrode to prevent short circuit between the positive electrode and the negative electrode and to allow the active ions to pass through.

In some embodiments, the positive electrode may be a positive electrode plate, and the positive electrode plate includes a positive electrode current collector and a positive electrode active material disposed on at least one surface of the positive electrode current collector.

The positive electrode current collector includes two back-to-back surfaces in a thickness direction of the positive electrode current collector, and the positive electrode active material is disposed on either or both of the two back-to-back surfaces of the positive electrode current collector.

As an example, the positive electrode current collector may be a metal foil or a composite current collector. For example, as a metal foil, the positive electrode current collector may use silver surface-treated aluminum or stainless steel, stainless steel, copper, aluminum, nickel, baked carbon, carbon, nickel, titanium, or the like. The composite current collector may include a polymer material matrix and a metal layer. The composite current collector may be formed by forming a metal material, such as aluminum, aluminum alloy, nickel, nickel alloy, titanium, titanium alloy, silver, silver alloy, or the like, on the polymer material matrix, for example, matrices of polypropylene, polyethylene terephthalate, polybutylene terephthalate, polystyrene, and polyethylene.

The positive electrode active material includes, for example, at least one of the following materials: lithium-containing phosphate, lithium transition metal oxide, and respective modified compounds thereof. The present application is not limited to these materials, and may also use other conventional materials that can be used as positive electrode active materials for batteries. One type of these positive electrode active materials may be used alone, or two or more types may be used in combination. Examples of lithium-containing phosphates may include, but are not limited to, at least one of lithium iron phosphate, for example, LiFePO4 (LFP for short), a composite material of lithium iron phosphate and carbon, lithium manganese phosphate, for example, LiMnPO4, a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate includes a negative electrode current collector and a negative electrode active material disposed on at least one surface of the negative electrode current collector.

The negative electrode current collector includes two back-to-back surfaces in a thickness direction of the negative electrode current collector, and the negative electrode active material is disposed on either or both of the two back-to-back surfaces of the negative electrode current collector.

As an example, the negative electrode current collector may be a metal foil or a composite current collector. For example, as a metal foil, the negative electrode current collector may use silver surface-treated aluminum or stainless steel, stainless steel, copper, aluminum, nickel, baked carbon, carbon, nickel, or titanium. The composite current collector may include a polymer material matrix and a metal layer. The composite current collector may be formed by forming a metal material, such as copper, copper alloy, nickel, nickel alloy, titanium, titanium alloy, silver, silver alloy, or the like, on the polymer material matrix, for example, matrices of polypropylene, polyethylene terephthalate, polybutylene terephthalate, polystyrene, and polyethylene.

The negative electrode active material includes, for example, at least one of the following materials: artificial graphite, natural graphite, soft carbon, hard carbon, a silicon-based material, a tin-based material, lithium titanate, or the like.

In some embodiments, the negative electrode may also be made of metal foam. The metal foam may be nickel foam, copper foam, aluminum foam, alloy foam, carbon foam, or the like. It should be noted that when the metal foam is used as the negative electrode plate, a surface of the metal foam may not be provided with a negative electrode active material, or may be provided with a negative electrode active material.

As an example, the negative electrode current collector may also be filled or/and deposited with a lithium source material, a potassium metal, or a sodium metal, and the lithium source material is lithium metal and/or a lithium-rich material.

The material of the positive electrode current collector may be, for example, aluminum, and the material of the negative electrode current collector may be, for example, copper.

The separator in the electrode assembly is disposed between the positive electrode and the negative electrode. In some embodiments, the separator is an isolating film. The present application does not limit the type of the isolating film, and any porous isolating film with good chemical stability and mechanical stability may be selected. For example, the main material of the isolating film may be selected from at least one of glass fiber, non-woven fabric, polyethylene, polypropylene, polyvinylidene fluoride, and ceramic.

In some embodiments, the separator is a solid electrolyte. The solid electrolyte is disposed between the positive electrode and the negative electrode and is capable of conducting ions and isolating the positive electrode and the negative electrode.

In some embodiments, the battery cell further includes an electrolyte, and the electrolyte conducts ions between the positive electrode and the negative electrode. The present application does not limit the type of the electrolyte, which can be selected according to requirements. The electrolyte be in a liquid state, a gel state, or a solid state.

In the embodiments of the present application, the electrode assembly may be a wound structure, where the positive electrode plate and the negative electrode plate are wound to form the wound structure. The electrode assembly may also be a laminated structure, for example, a plurality of positive electrode plates and a plurality of negative electrode plates may be respectively disposed, and the plurality of positive electrode plates and the plurality of negative electrode plates are alternately stacked. Alternatively, a plurality of positive electrode plates may be disposed, the negative electrode plate is folded to form a plurality of stacked folding segments, and one positive electrode plate is clamped between adjacent folding segments; or, both the positive electrode plate and the negative electrode plate are folded to form a plurality of stacked folding segments.

The separator may be disposed in plurality, respectively disposed between any adjacent positive electrode plate and negative electrode plate.

In some embodiments, the separator may be continuously disposed and disposed between any adjacent positive electrode plate and negative electrode plate by folding or winding.

The shape of the electrode assembly may be, for example, cylindrical, flat or polygonal prism, or the like. The electrode assembly may be provided with a tab, and the tab is configured to lead out current from the electrode assembly. The tab includes a positive tab and a negative tab.

In some embodiments, the battery cell includes a housing. The housing is configured to encapsulate components such as the electrode assembly and the electrolyte. The housing may be a steel housing, an aluminum housing, a plastic housing, for example, polypropylene, a composite metal housing, for example, a copper-aluminum composite housing, an aluminum-plastic film, or the like. The housing includes a box and a cover plate.

The battery cell may be, for example, a cylindrical battery cell, a prismatic battery cell, a pouch battery cell, or a battery cell of other shapes. The prismatic battery cell includes a square-shell battery cell, a blade-shaped battery cell or a polygonal prism battery, where the polygonal prism battery may be a hexagonal prism battery, or the like, which is not limited in the present application.

The battery described in the embodiments of the present application may refer to a single physical module including one or more battery cells for providing a higher voltage and capacity. When a plurality of battery cells are provided, the plurality of battery cells are connected in series, parallel or series-parallel via a busbar.

In some embodiments, the battery may be a battery module, and when a plurality of battery cells are provided, the plurality of battery cells are disposed and fixed to form a battery module.

In some embodiments, the battery may be a battery pack, and the battery pack includes a box and battery cells. The battery cell or battery module is accommodated in the box.

In some embodiments, the box may be a part of a chassis structure of a vehicle. For example, part of the box may become at least part of the chassis of the vehicle, or part of the box may become at least part of a cross beam and longitudinal beam of the vehicle.

Since the plurality of battery cells in the battery are electrically connected through a certain connection method, when electrolyte leakage occurs in the battery cells, it may cause risks such as short circuit. In view of this, the present application provides a battery and a signal transmission assembly thereof that can be applied to a battery with inverted battery cells to reduce the risk of short circuit between battery cells.

The technical solutions described in the embodiments of the present application are all applicable to various devices using batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of the present application are applicable to not only the apparatuses described above but also all apparatuses that use batteries. However, for brevity of description, in the following embodiments, an electric vehicle is used as an example for description.

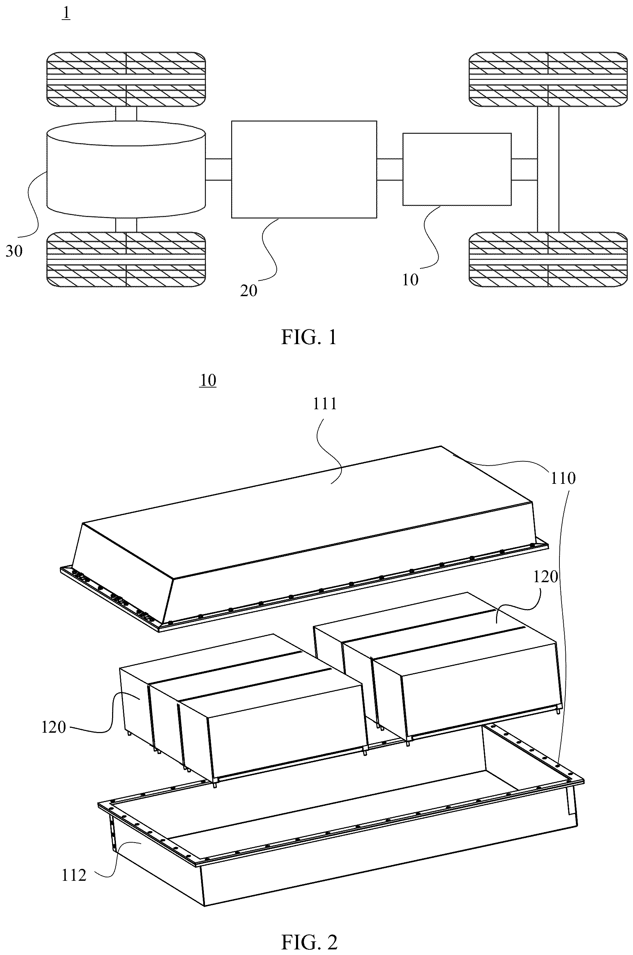

For example, FIG. 1 is a schematic structural diagram of a vehicle 1 according to an embodiment of the present application. The vehicle 1 may be a fossil fuel vehicle, a natural gas vehicle, or a new energy vehicle. The new energy vehicle may be a battery electric vehicle, a hybrid electric vehicle, a range-extended electric vehicle, or the like. A motor 30, a controller 20 and a battery 10 may be disposed inside the vehicle 1, and the controller 20 is configured to control the battery 10 to supply power to the motor 30. For example, the battery 10 may be disposed at the bottom, front, or rear of the vehicle 1. The battery 10 can be configured to supply power to the vehicle 1. For example, the battery 10 can be used as an operational power source for the vehicle 1 which is configured for a circuit system of the vehicle 1, for example, to satisfy power needs of start, navigation, and running of the vehicle 1. In another embodiment of the present application, the battery 10 can be used as not only the operational power source for the vehicle 1, but also a driving power source for the vehicle 1, replacing or partially replacing fossil fuel or natural gas to provide driving traction for the vehicle 1. In addition, a battery for low-voltage power supply, such as a 12V or 48V storage battery, may also be provided in the vehicle 1.

In order to meet different requirements for power use, the battery can include a plurality of different types of battery cells. The plurality of battery cells may be formed into multiple battery cell groups in series, parallel or series-parallel according to the types of battery cells, and then the multiple battery cell groups are connected in series to form a battery, where being connected in series-parallel means a combination of series and parallel connections. The plurality of different battery cells may also be directly formed into a battery in series, parallel or series-parallel. That is, a plurality of battery cells may be directly formed into a battery, or may be first formed into battery cell groups according to the types of battery cells, and then formed into a battery from the battery cell groups.

FIG. 2 is a schematic structural diagram of a battery 10 according to an embodiment of the present application. The battery 10 may include a plurality of battery cells (not shown in the figure). The battery 10 may further include a box (or referred to as a cover body) 110 that has a hollow structure inside, and the plurality of battery cells are accommodated in the box 110. The box 110 may include two portions that are referred to herein as a first portion 111 and a second box portion 112 respectively. The first box portion 111 and the second box portion 112 are snap-fitted together. The shapes of the first box portion 111 and the second box portion 112 may be determined according to the combined shape of the plurality of battery cells, and at least one of the first box portion 111 and the second box portion 112 has an opening.

For example, as shown in FIG. 2, the first box portion 111 and the second box portion 112 each may be a hollow structure with only one face having an opening, the opening of the first box portion 111 is corresponding to the opening of the second portion 112, and the first box portion 111 and the second box portion 112 are snap-fitted to form a box 110 with an enclosed chamber. The plurality of battery cells are connected in parallel, series, or series-parallel and then placed into the box 110 formed by snap-fitting the first box portion 111 and the second box portion 112.

For another example, only one of the first box portion 111 and the second box portion 112 is a hollow cuboid with an opening, and the other may be a plate for covering the opening. An example is used where the second box portion 112 is a hollow structure with only one face with an opening and the first box portion 111 is a plate. Therefore, the first box portion 111 covers the opening of the second box portion 112 to form a box 110 with an enclosed chamber. The chamber may be configured to accommodate the plurality of battery cells. The plurality of battery cells are connected in parallel, series, or series-parallel and then placed into the box 110 formed by snap-fitting the first box portion 111 and the second box portion 112.

In addition, the battery 10 may further include other structures. Details are not described herein.

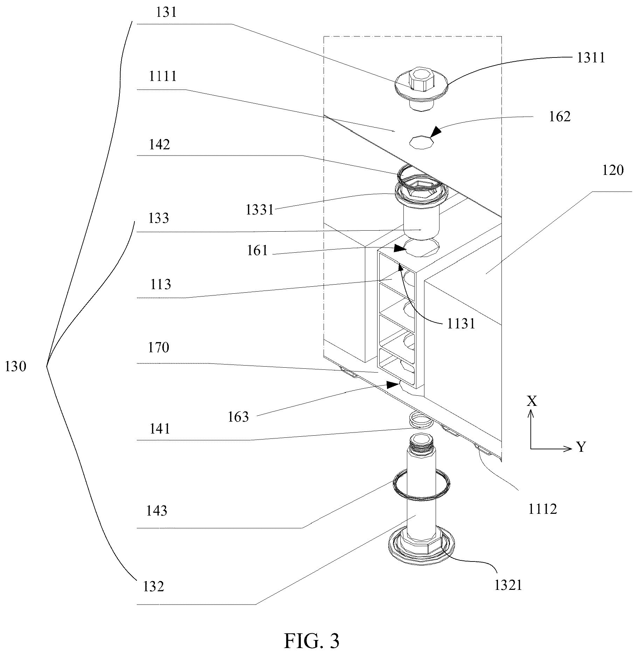

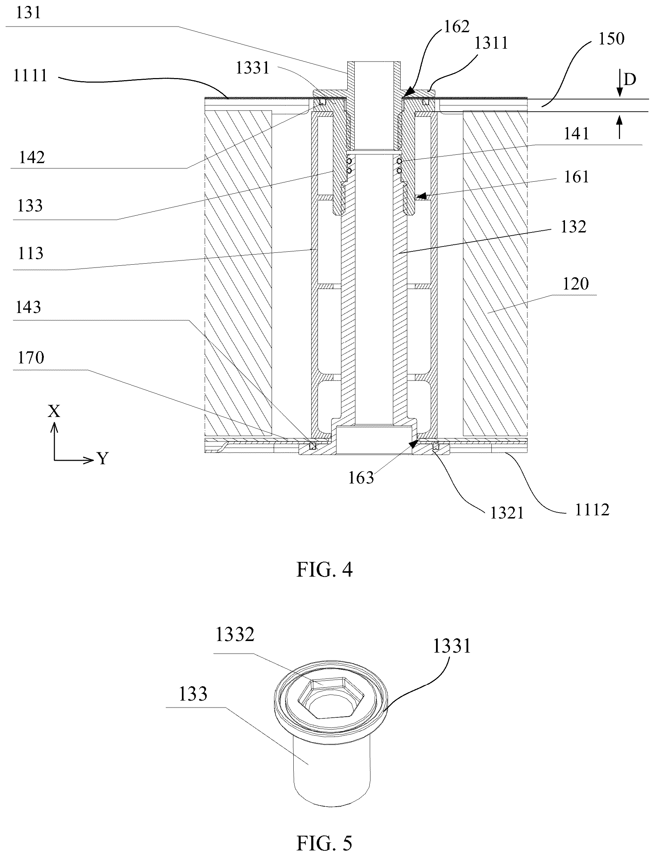

As an example, FIG. 3 and FIG. 4 show a battery 10 according to an embodiment of the present application. FIG. 3 is an exploded view of the battery 10, and FIG. 4 is a partial cross-sectional view of the battery 10. As shown in FIG. 3 and FIG. 4, the battery 10 includes a battery cell 120, a box 110, and a mounting structure 130, where the box 110 is configured to accommodate the battery cell 120, and the mounting structure 130 is configured to mount the battery 10 on an external mechanism of the battery 10.

As shown in FIG. 3 and FIG. 4, the box 110 includes a first wall 1111 and a second wall 1112 that are oppositely arranged, where the first wall 1111 and the second wall 1112 intersect with a first direction X. An included angle between the first wall 1111 and the first direction X may be set according to factors such as errors caused by the manufacturing process thereof. For example, the included angle between the first wall 1111 and the first direction X may be within any one of the following ranges: 90°±15°, 90°±10°, or 90°±5°. Certainly, the first wall 1111 may be perpendicular to the first direction X. Similarly, an included angle between the second wall 1112 and the first direction X may be set according to factors such as errors caused by the manufacturing process thereof. For example, the included angle between the second wall 1112 and the first direction X may be, for example, within any one of the following ranges: 90°±15°, 90°±10°, or 90°±5°. Certainly, the second wall 1112 may be perpendicular to the first direction X.

It can be understood that when the battery 10 is disposed in an electric apparatus, the first wall 1111 may be an upper wall of the box 110, and the second wall 1112 may be a lower wall of the box 110. A first cross beam 113 is disposed between the first wall 1111 and the second wall 1112.

The first cross beam 113 includes a third wall 1131 that intersects with the first direction X and is close to the first wall 1111, where a gap 150 is disposed between the third wall 1131 and the first wall 1111. An included angle between the third wall 1131 and the first direction X may be set according to factors such as errors caused by the manufacturing process thereof. For example, the included angle between the third wall 1131 and the first direction X may be, for example, within any one of the following ranges: 90°±15°, 90°±10°, or 90°±5°. Certainly, the third wall 1131 may be perpendicular to the first direction X.

It can be understood that when the battery 10 is disposed in an electric apparatus, the third wall 1131 may be an upper wall of the first cross beam 113. The first cross beam 113 may also include, for example, at least one cavity disposed along the first direction X to reduce the weight of the first cross beam 113.

As shown in FIG. 3 and FIG. 4, the first cross beam 113 is provided with a first through hole 161 extending along the first direction X, and the first through hole 161 is configured to accommodate the mounting structure 130. The mounting structure 130 is configured to at least partially pass through the first through hole 161 and abut against the third wall 1131 in the gap 150.

It can be seen that the first cross beam 113 is provided with the first through hole 161 for accommodating the mounting structure 130, the gap 150 is disposed between the third wall 1131 of the first cross beam 113 and the first wall 1111 of the box 110, and the mounting structure 130 is configured to pass through the first through hole 161 on the first cross beam 113 and abut against the first cross beam 113 in the gap 150, thereby making full use of the first through hole 161 on the first cross beam 113 and the gap 150 between the first cross beam 113 and the box 110, achieving the cooperation between the mounting structure 130 and the box 110 and the first cross beam 113, and improving the structural performance of the mounting structure 130.

In some embodiments, the mounting structure 130 may be formed by one or more sleeves. For example, as shown in FIG. 3 and FIG. 4, the mounting structure 130 includes a first sleeve 131, a second sleeve 132, and an adapter sleeve 133, where the adapter sleeve 133 is connected between the second sleeve 132 and the first sleeve 131.

An end of the adapter sleeve 133 extends along a second direction Y to form a first extension portion 1331, where the second direction Y is perpendicular to the first direction X; or, the second direction Y is allowed to be at a predetermined angle with the first direction X, and the predetermined angle may be set according to factors such as errors caused by the manufacturing process of the adapter sleeve 133. For example, the predetermined angle may be within any one of the following ranges: 90°±15°, 90°±10°, or 90°±5°. The first extension portion 1331 of the adapter sleeve 133 may be, for example, annular around the cylinder wall of the adapter sleeve 133. In this embodiment, the adapter sleeve 133 may be configured to pass through the first through hole 161 and abut against the third wall 1131 of the first cross beam 113 in the gap 150 through the first extension portion 1331.

As an example, as shown in FIG. 3 and FIG. 4, the end of the adapter sleeve 133 extends along the second direction Y to form the first extension portion 1331, and the adapter sleeve 133 is configured to pass through the first through hole 161 in the first cross beam 113 and abut against the third wall 1131 of the first cross beam 113 in the gap 150 through the first extension portion 1331. Since a dimension D of the gap 150 may be set based on a thickness of the first extension portion 1331, that is, a dimension of the first extension portion 1331 in the first direction X, it is conducive to improving the space utilization rate inside the battery 10.

If the thickness of the first extension portion 1331 is small, it may affect the structural strength thereof, and if the thickness of the first extension portion 1331 is large, the gap 150 needs to be set larger, which is not conducive to improving the space utilization rate inside the battery 10. Optionally, the dimension of the first extension portion 1331 in the first direction X may be set between 2 millimeters and 10 millimeters, for example, about 5 millimeters. Accordingly, the dimension D of the gap 150 may be set to be equal to or slightly larger than the dimension of the first extension portion 1331 to accommodate the first extension portion 1331. The adapter sleeve 133 passes through the first through hole 161 and the first extension portion 1331 abuts against the first cross beam 113 in the gap 150, the structural stability between the mounting structure 130 and the box 110 and the first cross beam 113 can be improved. This also allows for a smaller dimension D of the gap 150, requiring only the accommodation of the first extension portion 1331, thereby greatly improving the space utilization rate inside the battery 10.

In some embodiments, an installation portion 1332 is disposed on the first extension portion 1331 of the adapter sleeve 133, and the installation portion 1332 is configured to cooperate with an installation tool to install the adapter sleeve 133. By arranging the installation portion 1332 at the end of the adapter sleeve 133, it is convenient to achieve the installation of the adapter sleeve 133 using a matched installation tool.

For example, the installation portion 1332 may be a recess disposed on the first extension portion 1331, an opening of the recess faces the first wall 1111 along the first direction X, and the recess is configured to be snap-fitted with the installation tool. By snap-fitting the installation tool into the recess and applying a torsional force to the adapter sleeve 133 from the end of the adapter sleeve 133 to sleeve the adapter sleeve 133 with the first sleeve 131, it is easy to implement and simple to operate.

The projection shape of the recess on a plane perpendicular to the first direction X may be, for example, a linear shape, a cross shape, a hexagonal shape, or the like. Accordingly, the projection of the part on the installation tool for snap-fitting into the recess on the plane may also be a linear shape, a cross shape, a hexagonal shape, or the like.

As an example, as shown in the structure of the adapter sleeve 133 in FIG. 5, the installation portion 1332 is a hexagonal recess. Accordingly, the installation tool is an Allen wrench.

The adapter sleeve 133 may only have an upper flange face without a lower flange face. For example, the end face of the first extension portion 1331 shown in FIG. 5 facing the first wall 1111 is the upper flange face; alternatively, the adapter sleeve 133 may also have both an upper flange face and a lower flange face.

In some embodiments, a second through hole 162 is disposed at a position on the first wall 1111 corresponding to the first through hole 161, the first sleeve 131 includes a second extension portion 1311 extending along the second direction Y, and the first sleeve 131 is configured to pass through the second through hole 162 and abut against the first wall 1111 through the second extension portion 1311 on a side of the first wall 1111 away from the battery cell 120. In this way, the connection between the mounting structure 130 and the first wall 1111 of the box 110 is achieved.

For example, as shown in FIG. 3 and FIG. 4, the first extension portion 1331 is located in the gap 150 between the first wall 1111 of the box 110 and the third wall 1131 of the first cross beam 113. The second extension portion 1311 of the first sleeve 131 and the first extension portion 1331 of the adapter sleeve 133 are respectively located on an upper side and a lower side of the first wall 1111 of the box 110. After the first sleeve 131 is connected to the adapter sleeve 133, the first extension portion 1331 and the second extension portion 1311 can clamp the first wall 1111 along the first direction X.

Optionally, as shown in FIG. 3 and FIG. 4, a first sealing member 141 is disposed between the first extension portion 1331 and the first wall 1111. The arrangement of the first sealing member 141 can, to a certain extent, block external liquid from entering the interior of the battery 10 from a contact position between the first extension portion 1331 and the first wall 1111. The first sealing member 141 may be, for example, a double-rib sealing ring.

In some embodiments, as shown in FIG. 3 and FIG. 4, the inner wall of the adapter sleeve 133 is sleeved on the outer wall of the second sleeve 132 and the outer wall of the first sleeve 131, thereby achieving the connection to the second sleeve 132 and the first sleeve 131. For example, the inner wall of the adapter sleeve 131, the outer wall of the first sleeve 131, and the outer wall of the second sleeve 132 may be provided with threads, so that the adapter sleeve 133 is connected to the first sleeve 131 and the second sleeve 132 respectively by threaded connection.

Optionally, as shown in FIG. 3 and FIG. 4, a second sealing member 142 is disposed between the inner wall of the adapter sleeve 133 and the outer wall of the second sleeve 132. The arrangement of the second sealing member 142 can, to a certain extent block external liquid from entering the interior of the battery 10 from a connection between the adapter sleeve 133 and the second sleeve 132. The second sealing member 142 may be, for example, an O-shaped sealing ring.

It can be understood that a diameter of the first through hole 161 can be determined according to a diameter of the mounting structure 130. For example, the diameter of the position of the first through hole 161 corresponding to the second sleeve 132 needs to be greater than or equal to an outer diameter of the second sleeve 132, so that the second sleeve 132 can be accommodated in the corresponding position in the first through hole 161. For another example, the diameter of the position of the first through hole 161 corresponding to the adapter sleeve 133 needs to be greater than or equal to an outer diameter of the adapter sleeve 133, so that the adapter sleeve 133 can be accommodated in the corresponding position in the first through hole 161. Certainly, the diameter of the first through hole 161 can be set to a fixed value, and the fixed value is greater than or equal to the outer diameter of the adapter sleeve 133. It should be noted that the diameter of the first through hole 161 does not need to be set too large, as long as it can accommodate the mounting structure 130. If the diameter of the first through hole 161 is set too large, it may affect the overall strength of the first cross beam 113.

In some embodiments, as shown in FIG. 3 and FIG. 4, the battery 10 further includes a thermal management component 170, where the thermal management component 170 is disposed between the second wall 1112 of the box 110 and the battery cell 120, a third through hole 163 is provided at a position on the thermal management component 170 corresponding to the first through hole 161, an end of the second sleeve 132 away from the adapter sleeve 133 extends along the second direction Y to form a third extension portion 1321, and the second sleeve 132 is configured to pass through the third through hole 163 and abut against the thermal management component 170 through the third extension portion 1321 on a side of the thermal management component 170 away from the battery cell 120. In this way, the mounting structure 130 can provide mounting force to the battery 10 through the thermal management component 170.

The thermal management component 170 may be, for example, a heat exchange plate for achieving heat exchange of the battery cell 120. Typically, a water-cooling plate or the like may be used as the heat exchange plate of the battery cell 120.

Optionally, a third sealing member 143 is disposed between the third extension portion 1321 and the thermal management component 170. The arrangement of the third sealing member 143 can, to a certain extent, block external liquid from entering the interior of the battery 10 from a connection between the first sleeve 131 and the thermal management component 170. The third sealing member 143 may be, for example, a double-rib sealing ring.

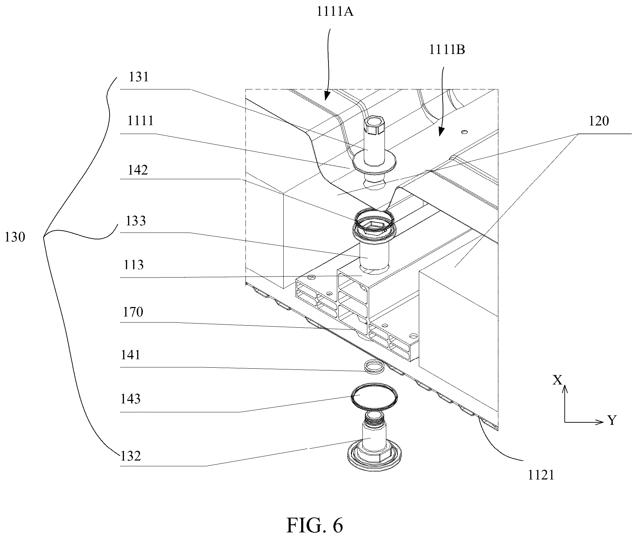

In some embodiments, as shown in FIG. 6, the first wall 1111 of the box 110 includes a first region 1111A and a second region 1111B, where the first region 1111A is configured to connect the mounting structure 130, the first region 1111A and the second region 1111B have different heights along the first direction X to form an accommodation space along the first direction X, and the accommodation space can be configured to accommodate an external mechanism such as a vehicle body beam. That is, the upper wall of the box 110 of the battery 10 can be provided with an accommodation recess to accommodate the external mechanism of the battery 10, which is conducive to improving the utilization rate of the space inside the vehicle.

The present application also provides an electric apparatus, including the battery 10 described in any of the above embodiments, where the battery 10 is configured to provide electric energy to the electric apparatus. The electric apparatus may be, for example, the vehicle shown in FIG. 1.

It can be seen that the battery 10 of the embodiment of the present application is mounted on the vehicle body through the mounting structure 130, the mounting structure 130 includes the second sleeve 132, the first sleeve 131, and the adapter sleeve 133, and the end of the adapter sleeve 133 is formed with the first extension portion 1331. Since the first cross beam 113 is disposed in the box 110, and the gap 150 is provided between the first cross beam 113 and the box 110, various sleeves of the mounting structure 130 are sequentially inserted into the first through hole 161 at the corresponding position on the first cross beam 113, and the first extension portion 1331 is positioned in the gap 150 and overlapped on the first cross beam 113. Since the thickness of the first extension portion 1331 is small, the gap 150 can be set to be small, thereby improving the space utilization rate inside the battery 10.

It should be noted that, on the premise of no conflict, the embodiments described in the present application and/or the technical features in the embodiments may be arbitrarily combined with each other, and the technical solutions obtained after the combination should also fall within the protection scope of the present application.

Although the present application has been described with reference to the preferred embodiments, various modifications to the present application and replacements of the components therein with equivalents can be made without departing from the scope of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery, **characterized by** comprising:
a battery cell;
a box, configured to accommodate the battery cell, wherein the box comprises a first wall and a second wall that are oppositely arranged, the first wall and the second wall intersect with a first direction, a first cross beam is disposed between the first wall and the second wall, the first cross beam comprises a third wall that intersects with the first direction and is close to the first wall, a gap is disposed between the third wall and the first wall, and the first cross beam is provided with a first through hole extending along the first direction; and
a mounting structure, configured to at least partially pass through the first through hole and abut against the third wall in the gap.

2. The battery according to claim 1, **characterized in that** the mounting structure comprises a first sleeve, a second sleeve, and an adapter sleeve connected between the second sleeve and the first sleeve, an end of the adapter sleeve extends along a second direction to form a first extension portion, and the second direction is at a predetermined angle with the first direction, wherein the adapter sleeve is configured to pass through the first through hole and abut against the third wall in the gap through the first extension portion.

3. The battery according to claim 2, **characterized in that** a second through hole is disposed at a position on the first wall corresponding to the first through hole, the first sleeve comprises a second extension portion extending along the second direction, and the first sleeve is configured to pass through the second through hole to connect to the adapter sleeve and abut against the first wall through the second extension portion on a side of the first wall away from the battery cell.

4. The battery according to claim 2 or 3, **characterized in that** a first sealing member is disposed between the first extension portion and the first wall.

5. The battery according to any one of claims 2 to 4, **characterized in that** an inner wall of the adapter sleeve is sleeved on outer walls of the first sleeve and the second sleeve.

6. The battery according to claim 5, **characterized in that** a second sealing member is disposed between the inner wall of the adapter sleeve and the outer wall of the second sleeve.

7. The battery according to any one of claims 2 to 6, **characterized in that** the battery further comprises a thermal management component of the battery cell, the thermal management component is disposed between the second wall and the battery cell, a third through hole is provided at a position on the thermal management component corresponding to the first through hole, the second sleeve comprises a third extension portion extending along the second direction, and the second sleeve is configured to pass through the third through hole to connect to the adapter sleeve and abut against the thermal management component through the third extension portion on a side of the thermal management component away from the battery cell.

8. The battery according to claim 7, **characterized in that** a third sealing member is disposed between the third extension portion and the thermal management component.

9. The battery according to any one of claims 2 to 8, **characterized in that** the predetermined angle is within any one of the following ranges: 90°±15°, 90°±10°, or 90°±5°.

10. The battery according to any one of claims 2 to 9, **characterized in that** an installation portion is disposed on the first extension portion, and the installation portion is configured to cooperate with an installation tool to install the adapter sleeve.

11. The battery according to claim 10, **characterized in that** the installation portion is a recess disposed on the first extension portion, an opening of the recess faces the first wall along the first direction, and the recess is configured to be snap-fitted with the installation tool.

12. The battery according to claim 11, **characterized in that** the recess is a hexagonal recess, and the installation tool is an Allen wrench.

13. The battery according to any one of claims 1 to 12, **characterized in that**,
an included angle between the first wall and the first direction is within any one of the following ranges: 90°±15°, 90°±10°, or 90°±5°;
an included angle between the second wall and the first direction is within any one of the following ranges: 90°±15°, 90°±10°, or 90°±5°; and
an included angle between the third wall and the first direction is within any one of the following ranges: 90°±15°, 90°±10°, or 90°±5°.

14. The battery according to any one of claims 1 to 13, **characterized in that** the first wall comprises a first region and a second region, wherein the first region is configured to connect the mounting structure, the first region and the second region have different heights along the first direction to form an accommodation space along the first direction, and the accommodation space is configured to accommodate an external mechanism of the battery.

15. An electric apparatus, **characterized by** comprising the battery according to any one of claims 1 to 14, wherein the battery is configured to provide electric energy to the electric apparatus.
